# EUROPEAN PATENT SPECIFICATION

(11) **EP 2 336 884 B1**
(45) Date of publication and mention of the grant of the patent: **27.04.2016**
(21) Application number: 10190692.3
(22) Date of filing: 10.11.2010
(51) Int. Cl.: G06F 9/455

(54) **Appliance maintenance in a virtualized computing environment**
Anwendungswartung in einer virtualisierten Computersystemumgebung
Maintenance d'appareil dans un environnement de système informatique virtuel

(30) Priority: 23.11.2009 US 624138
(43) Date of publication of application: 22.06.2011
(73) Proprietor: Novell, Inc., Provo, Utah 84606-6169 (US)
(72) Inventor: Srinivasan, Kattiganehalli Y., New Jersey 08550 (US)
(74) Representative: Hanna, Peter William Derek

(56) References cited:
- US-A1- 2006 184 937
- US-A1- 2009 249 332
- SAI SRINIVAS DHARANIKOTA ET AL: "Manageable Dynamic Execution Environments on the Grid Using Virtual Machines", PARALLEL PROCESSING AND APPLIED MATHEMATICS LECTURE NOTES IN COMPUTER SCIENCE;;LNCS, SPRINGER, BERLIN, DE, vol. 3911, 1 January 2006 (2006-01-01), pages 643-650, XP019032485, ISBN: 978-3-540-34141-3
- SAPUNTZAKIS C ET AL: "Virtual appliances for deploying and maintaining software", PROCEEDINGS OF THE SYSTEMS ADMINISTRATION CONFERENCE. LISA, XX, XX, 26 October 2003 (2003-10-26), pages 181-194, XP002462377,

## Description

Generally, the present invention relates to computing devices and environments involving virtual machines. Particularly, although not exclusively, it relates to software appliances in such environments and maintaining them in situations requiring upgrades and/or patching. Other embodiments contemplate computing systems and computer program products, to name a few.

### BACKGROUND OF THE INVENTION

Software appliances have for some time been positioned as a cost effective and simple way to deploy applications. As is known, software appliances are single images purpose built to run a single or a set of related applications. They are pre-configured and pre-tuned to undertake this role, which contrasts with the traditional software deployment model requiring: installing a correct operating system version based on the to-be-hosted application; configuring and tuning the operating system for optimal hosting; installing the application; and configuring and tuning the application.

In an appliance, however, all of these steps can be performed during appliance creation thereby relieving the end-user of unnecessary complexity which is typically error prone. Also, appliances can be targeted for hosting on physical hardware or as virtual machines on a virtualization host. Appliances hosted as virtual machines are becoming popular as support for virtualization becomes ubiquitous.

Notwithstanding appliance packaging addressing many of the installation, configuration and tuning issues associated with software deployment, patch management remains a significant issue requiring addressing. Unfortunately, the current state of the art treats patching/updating appliances exactly the same as patching/updating server and client machines. One problem with this relates to the granularity of patches existing at the package level, thereby bestowing responsibility of applying patches on the end-user or administrator. Also, once a set of patches are applied, the system may not function as expected because of the potential mismatch of the various software components that together constitute the system.

Another problem with the art relates to "mapping" between a software installation and a piece of hardware. In traditional data centers with N servers, administrators need to ensure N instances of operating systems being properly patched to an appropriate patch level. This one-to-one mapping persists even when the software instance is not active.

With virtualized data centers, however, patching problems are exacerbated. That is, M workloads may be concurrently executing on the N computing devices, whereby M = K N and K is an average consolidation factor of virtual machines hosted on a server greater or equal to one. Consider here the situation in which a "L-A-M-P" appliance is instantiated to concurrently run a thousand instances on a much smaller number of servers (e.g., one hundred servers). Using the traditional maintenance model, patching/updating is required one thousand times for copies of the same image when in fact the end-user may choose to keep in persistent store only one image of the (LAMP) appliance. Additionally, there could exist an arbitrary number of workload images, P, that remain un-instantiated at any given point in time. Ultimately, system administrators need to ensure that all the workloads under management (M+P) have been appropriately patched.

In either traditional or virtualized environments, opportunities to test the efficacy of the patches remain with the end-users or administrators since they apply them. Absent feedback, this prevents the patch provider and/or appliance builder from knowing the effectiveness of the patches relative to various problems. It also further burdens the end users and administrators to communicate their feedback.

Accordingly, a need exists in the art for better appliance maintenance. The need further extends to at least the following: exploiting special attributes of appliances to simplify maintenance; avoiding treating appliances as if they are traditional non-virtualized software stacks; testing efficacy of patching; alleviating end user and administrator burdens; considering how appliance images are scalably managed in a data center, e.g., a single image being used to instantiate a large number of service instances; minimizing appliance maintenance costs; and eliminating patch-related errors. Any improvements along such lines should also contemplate good engineering practices, such as simplicity, ease of implementation, unobtrusiveness, stability, etc.

SAPUNTZAKIS C et al; "Virtual appliances for deploying and maintaining software", Proceedings of the Systems Administration Conference, LISA, XX, XX, 26 October 2003, pages 181-194, XP002462377 is representative of the state of the art.

### SUMMARY OF THE INVENTION

The present invention provides methods of maintaining computing appliances, in accordance with claims which follow. By applying the principles and teachings associated with software appliance maintenance in computing system environment, the foregoing and other problems become solved. Broadly, methods and apparatus update original appliance images with single new images in persistent storage. Only a single act of maintenance occurs instead of multiple patches for many instantiations of the same image. This keeps the appliance definition as a fixed number of bits. It also facilitates instantiation of multiple appliances from the single image.

During creation, an appliance binary of an original appliance is partitioned into kernel files, application overlay files and a configuration file. The kernel file enables booting the operating system image as a standalone "purpose built" operating environment. Once the operating environment is booted, the fully configured (and tuned) application file is overlaid to create the appliance. The virtual machine configuration file is used to spawn an appropriate virtual machine that is assigned the requested resources (as specified in the configuration file) in which the bootable OS image of the application is brought up.

Also, the kernel file is booted by an appliance owner during instantiation. An identifier of the appliance is sent back to the appliance creator to determine whether an updated operating system image exists. If so, a whole updated image is delivered back to the owner where it replaces the original image in persistent storage. Pluralities of appliances are instantiated from the updated image. If not, appliance boot sequence continues, including applying application overlay files. The overlays are obtained during appliance shutdown by taking snapshots of application-specific files and system files that the instantiated appliance may have modified during execution. Other features contemplate computing systems, executable instructions loaded on one or more computing devices for undertaking the foregoing, and computer program products available as a download or on a computer readable medium. The computer program products are available for installation on a network appliance or an individual computing device.

Certain advantages realized by embodiments of the invention include, but are not limited to: significantly simplifying appliance maintenance, including minimizing costs; maintaining appliance images, not patches; minimizing or eliminating patch-related errors; managing appliances via the operating environment; and scalable solutions that conserve network bandwidth.

These and other embodiments of the present invention will be set forth in the description which follows, and in part will become apparent to those of ordinary skill in the art by reference to the following description of the invention and referenced drawings or by practice of the invention.

### BRIEF DESCRIPTION OF THE DRAWINGS

The accompanying drawings incorporated in and forming a part of the specification, illustrate several aspects of the present invention, and together with the description serve to explain the principles of the invention. In the drawings:
Figure 1 is a diagrammatic view in accordance with the present invention of a basic computing device hosting virtual machines;
Figure 2 is a combined diagrammatic view and flow chart in accordance with the present invention for appliance maintenance; and
Figures 3 and 4 are diagrams and flow charts of various detail in accordance with the present invention for an embodiment of appliance maintenance contemplated in Figure 2.

### DETAILED DESCRIPTION OF THE ILLUSTRATED EMBODIMENTS

In the following detailed description of the illustrated embodiments, reference is made to the accompanying drawings that form a part hereof, and in which is shown by way of illustration, specific embodiments in which the invention may be practiced. These embodiments are described in sufficient detail to enable those skilled in the art to practice the invention and like numerals represent like details in the various figures. Also, it is to be understood that other embodiments may be utilized and that process, mechanical, electrical, arrangement, software and/or other changes may be made without departing from the scope of the present invention. In accordance with the present invention, methods and apparatus are hereinafter described for appliance maintenance in a computing environment with virtual machines.

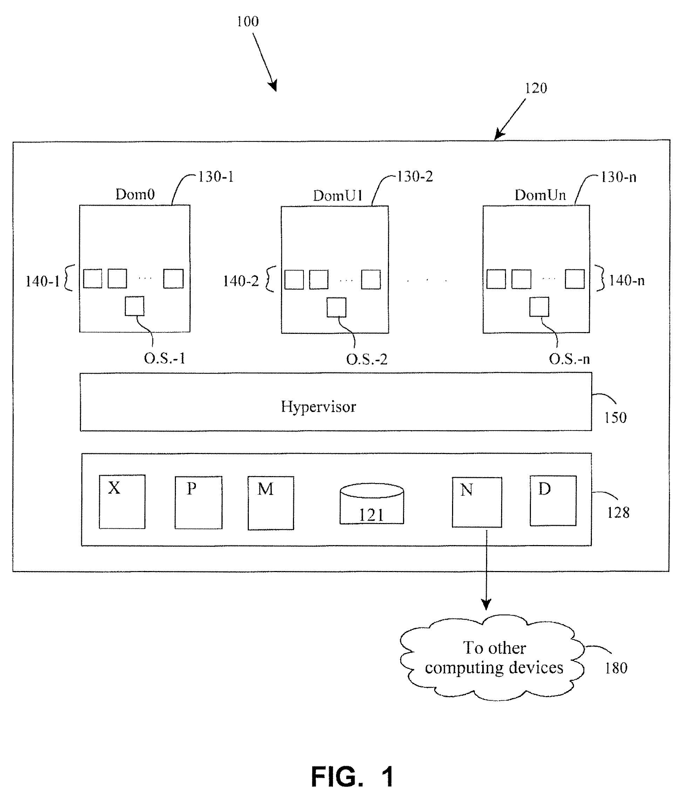

With reference to Figure 1, a computing system environment 100 includes a computing device 120. Representatively, the device is a general or special purpose computer, a phone, a PDA, a server, a laptop, etc., having a hardware platform 128. The hardware platform includes physical I/O and platform devices, memory (M), processor (P), such as a physical CPU(s), USB or other interfaces (X), drivers (D), etc. In turn, the hardware platform hosts one or more guest virtual machines in the form of domains 130-1 (domain 0, or management domain), 130-2 (domain U1), ... 130-n (domain Un), each potentially having its own guest operating system (O.S.) (e.g., Linux, Windows, Netware, Unix, etc.), applications 140-1, 140-2, ... 140-n, file systems, etc. The workloads of each virtual machine also consume data stored on one or more disks 121.

An intervening Xen, Hyper V, KVM, VmWare or other hypervisor 150, also known as a "virtual machine monitor", or virtualization manager, serves as a virtual interface to the hardware and virtualizes the hardware. It is also the lowest and most privileged layer and performs scheduling control between the virtual machines as they task the resources of the hardware platform, e.g., memory, processor, storage, network (N) (by way of network interface cards, for example), etc. The hypervisor also manages conflicts, among other things, caused by operating system access to privileged machine instructions. The hypervisor can also be type 1 (native) or type 2 (hosted). According to various partitions, the operating systems, applications, application data, boot data, or other data, executable instructions, etc., of the machines are virtually stored on the resources of the hardware platform.

In use, the representative computing device 120 is arranged to communicate 180 with one or more other computing devices or networks. In this regard, the devices may use wired, wireless or combined connections to other devices/networks and may be direct or indirect connections. If direct, they typify connections within physical or network proximity (e.g., intranet). If indirect, they typify connections such as those found with the internet, satellites, radio transmissions, or the like. The connections may also be local area networks (LAN), wide area networks (WAN), metro area networks (MAN), etc., that are presented by way of example and not limitation. The topology is also any of a variety, such as ring, star, bridged, cascaded, meshed, or other known or hereinafter invented arrangement.

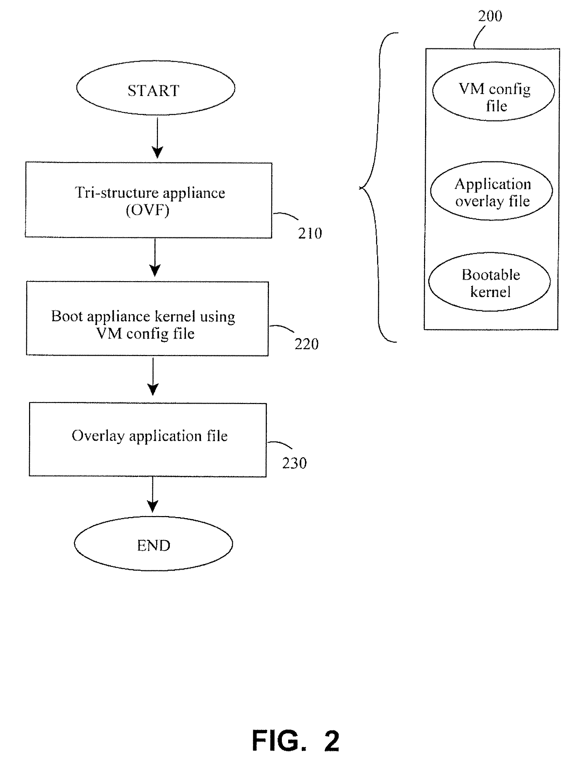

As noted earlier, software appliances packaged as virtual machines are becoming very popular and soon may become the preferred manner for deploying applications. With reference to Figure 2, an appliance structuring and boot sequencing is presented. An appliance 200 is structured as a set of files: a) bootable kernel file- the bootable operating system (OS) image; b) application overlay file - the installed application image; and c) the virtual machine configuration (VM config) file. As this is an appliance, no further configuration or tuning is required by appliance owners either for the operating system or for the application (workload). Also, the tri-partitioning 210 of the OS and the application is done by an appliance creator in such a way that the operating system image can be initially booted 220 as a standalone "purpose built" operating environment. Once this operating environment is booted, the fully configured (and tuned) application file is overlaid 230 to create the appliance. The virtual machine configuration file is used to spawn an appropriate virtual machine that is assigned the requested resources (as specified in the VM config file) in which the bootable OS image of the application is brought up. When the appliance is shutdown, all application specific files as well as other system files that the running application may have modified is snapshotted to generate the "application overlay file" that will be used for a subsequent boot of the appliance. To ensure that the application overlay is installed on the correct OS image, both the OS and the application file will be appropriately tagged with an appliance identifier.

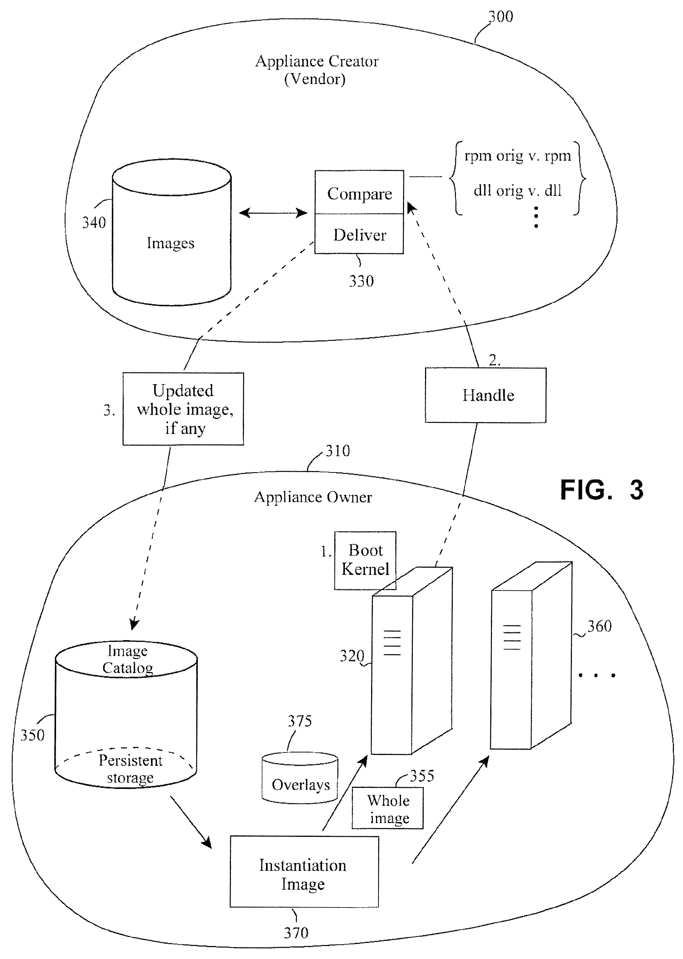

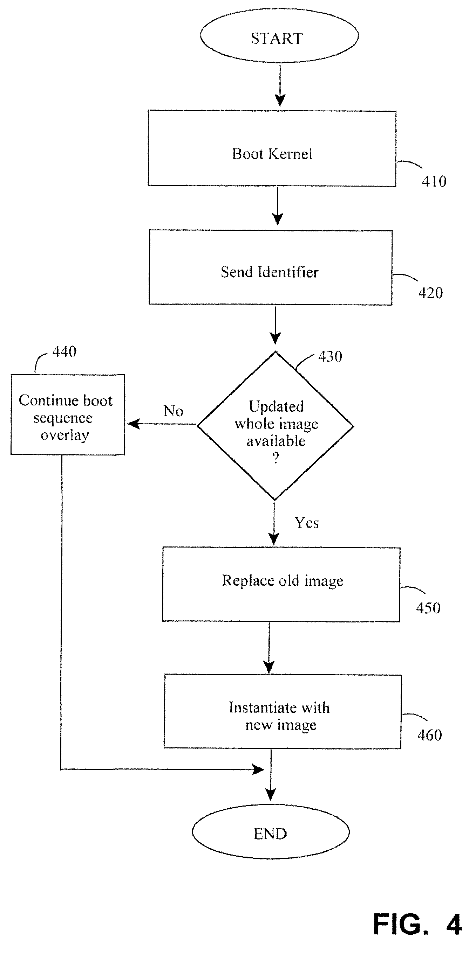

With this structuring of the appliance 200, there are various interesting techniques to maintain the bootable OS image as it relates to update/patch maintenance. Consider for instance a product SuSe Studio by the assignee of this invention (Novell, Inc.). SuSe Studio is a hosted service that permits independent software vendors (ISVs) to build or create appliances. Typically, these appliances are built using SLES as the appliance OS. One of the services offered with this is management of the OS. Applied to this invention, Novell can now ensure that the bootable operating system component of the appliance 200 is maintained by Novell. This will keep certain that the operating system remains current regarding all relevant patches. With reference to Figures 3 and 4, one possible implementation of this "managed appliance" service proceeds as follows:

In the appliance creation phase, the appliance binary is partitioned as seen in Figure 2. It is delivered from the appliance creator 300 to the appliance owner 310. Also, each appliance is associated with a persistent and unique identifier or handle. In one instance, it can be a raw data number large enough to accommodate all possible appliances so that numbers are only used once. In other instances, the identifier can be a name or a list of (Red Hat Package Manager) RPM's, DLL's (Dynamic Linked Libraries), etc. that define the software thereof. Combinations are also possible as are other identifiers readily imagined by those skilled in the art.

At the appliance owner's site, the kernel file is booted for the appliance when the appliance is first instantiated, step 410. This is seen as item 1 "boot kernel" on a computing device 320 remote from the appliance creator. Once the base system comes up, it communicates back to the appliance creator using the entity handle described, item 2 and step 420. Upon receipt of the handle, the appliance builder 300 determines whether an updated whole operating system image is available for this appliance, step 430. It does this, in one instance, by comparing (330) RPM's or DLL's of the original image provided to the appliance owner against those of the current image stored at 340. If the operating system image at the appliance owner's site is current, nothing more needs to occur and the appliance boot sequence continues at step 440.

If there is an updated operating system image, on the other hand, the whole image is delivered from the customer care center of the appliance building entity, item 3. Upon receipt, this newly downloaded OS image replaces in persistent storage 350 the OS component of the application image at the customer site, step 450. Thereafter, this newly downloaded OS image 355 is used to instantiate appliances at step 460 on computing devices 320, 360. It may also do so under the guidance of an instantiation or deployment engine 370. Of course, any application overlays 375 from earlier usage of the appliances are also provided according to step 230 in Figure 2.

As a result, the foregoing scheme ensures that the customer always gets a fully patched bootable OS image for each appliance under management. This scheme fully automates patch management for the appliance user. Furthermore, the proposed protocol ensures that only one instance of the bootable OS image is managed by the appliance vendor even though the customer may have arbitrary number of instances of this appliance on many virtual or physical computing devices. This ensures scalability. Also, the customer can sign up for this image maintenance at the time of initial creation, thereby offloading patching responsibility from end-users and administrators of the appliance owner to the vendor. Furthermore, since the appliance creator has access to all the components of the appliance, the updated OS can be tested at the appliance creator's site before posting back the updated image for download by the customers. This avoids patching related problems at the customer site and alleviates maintenance obligations of the end users and administrators. It should be also appreciated that the foregoing eliminates pushing down of patches in lieu of pushing down images. In turn, appliances are maintained as a fixed set of bits and considers how appliance images are managed in data centers, e.g., a single image being used to instantiate a large number of service instances.

In other embodiments, skilled artisans should recognize that the foregoing schema can be applied to the application stack as well as the operating system.

In still other embodiments, skilled artisans will appreciate that enterprises can implement some or all of the foregoing with the assistance of system administrators acting on computing devices by way of executable code. In turn, methods and apparatus of the invention further contemplate computer executable instructions, e.g., code or software, as part of computer program products on readable media, e.g., disks for insertion in a drive of computing device, or available as downloads or direct use from an upstream computing device. When described in the context of such computer program products, it is denoted that items thereof, such as modules, routines, programs, objects, components, data structures, etc., perform particular tasks or implement particular abstract data types within various structures of the computing system which cause a certain function or group of function, and such are well known in the art.

The foregoing has been described in terms of specific embodiments, but one of ordinary skill in the art will recognize that additional embodiments are possible without departing from its teachings. This detailed description, therefore, and particularly the specific details of the exemplary embodiments disclosed, is given primarily for clarity of understanding, and no unnecessary limitations are to be implied, for modifications will become evident to those skilled in the art upon reading this disclosure and may be made without departing from the scope of the invention, as defined by the appended claims. Relatively apparent modifications, of course, include combining the various features of one or more figures with the features of one or more of the other figures.

## Claims

1. A computer-implemented method of maintaining software appliances in a computing system environment, a software appliance comprising a single image being pre-configured to run a single or a set of related applications and adapted for hosting on physical hardware or as virtual machines on a virtualization host, said method comprising:
partitioning a software appliance (210) into pluralities of files (200) during creation, a kernel (1) being one of the files;
separately booting (220,410) the kernel (1) of the software appliance (210) on a processor of a computing device (320);
sending (420) an identifier of the software appliance to another computing device (300);
receiving (450) a single whole updated image (3) for the operating system of the software appliance based on the sent identifier (2); and
instantiating (460) pluralities of updated software appliances (360) from the received single whole updated image by overlaying (230, 440) application specific files (375) on the single whole updated image.

2. The method of claim 1, further including overlaying (230,440) application specific files after the booting the kernel.

3. The method of claim 1, further including determining (430) at the another computing device whether the single whole updated image is different than an original image at the computing device.

4. The method of claim 1, further including using the sent identifier (2) to ascertain a list of rpm's used to configure the software appliance during appliance creation.

5. The method of claim 1, wherein the instantiating (460) pluralities of software appliances from the received single whole updated image further includes instantiating the pluralities of software appliances on still other computing devices upon a subsequent reboot of the still other computing devices.

6. The method of claim 1, further including shutting down the software appliance, including taking snapshots of application specific files and other system files that the software appliance may have modified while executing.

7. The method of claim 7, upon a subsequent booting of the kernel, instantiating the taken snapshots on the computing device.

8. The method of claim 1, further including replacing in persistent storage (350) an original image for the operating system of the software appliance with the single whole updated image (355).

## Patentansprüche

1. Computerimplementiertes Verfahren zur Wartung von Softwareanwendungen in einer Computersystemumgebung, wobei eine Softwareanwendung ein einzelnes Bild umfasst, das dazu vorkonfiguriert ist, eine einzelne oder einen Satz von verwandten Anwendungen ausführen, und für ein Hosting auf physischer Hardware oder als virtuelle Maschinen auf einem Virtualisierungshost ausgerichtet ist, das Verfahren umfassend:
Partitionieren einer Softwareanwendung (210) in Mehrzahlen von Dateien (200) während der Erzeugung, wobei es sich bei einer der Dateien um einen Betriebssystemkern (1) handelt;
separates Booten (220,410) des Betriebssystemkerns (1) der Softwareanwendung (210) auf einem Prozessor eines Computergeräts (320);
Senden (420) einer Kennung der Softwareanwendung an ein anderes Computergerät (300);
Empfangen (450) eines einzelnen ganzen aktualisierten Bildes (3) für das Betriebssystem der Softwareanwendung je nach der gesendeten Kennung (2); und
Instantiieren (460) von Mehrzahlen von aktualisierten Softwareanwendungen (360) aus dem empfangenen einzelnen ganzen aktualisierten Bild durch Überlagern (230, 440) von anwendungsspezifischen Dateien (375) auf dem einzelnen ganzen aktualisierten Bild.

2. Verfahren gemäß Anspruch 1, weiterhin umfassend ein Überlagern (230,440) von anwendungsspezifischen Dateien nach dem Booten des Betriebssystemkerns.

3. Verfahren gemäß Anspruch 1, weiterhin umfassend ein Feststellen (430) an dem anderen Computergerät, ob das einzelne ganze aktualisierte Bild sich von einem Originalbild an dem Computergerät unterscheidet.

4. Verfahren gemäß Anspruch 1, weiterhin umfassend ein Verwenden der gesendeten Kennung (2), um eine Liste von RPMs, die zur Konfiguration der Softwareanwendungen während der Anwendungserzeugung verwendet wurden, zu bestimmen.

5. Verfahren gemäß Anspruch 1, wobei das Instantiieren (460) der Mehrzahlen von Softwareanwendungen aus dem empfangenen einzelnen ganzen aktualisierten Bild weiterhin ein Instantiieren der Mehrzahlen von Softwareanwendungen auf noch weiteren Computergeräten nach einem anschließenden Reboot der noch weiteren Computergeräte umfasst.

6. Verfahren gemäß Anspruch 1, weiterhin umfassend ein Herunterfahren der Softwareanwendung, umfassend das Erstellen von Schnappschüssen von anwendungsspezifischen Dateien und anderer Systemdateien, die die Softwareanwendung während der Ausführung verändert haben könnte.

7. Verfahren gemäß Anspruch 7, wobei nach einem anschließenden Booten des Betriebssystemkerns die erstellten Schnappschüsse auf dem Computergerät instantiiert werden.

8. Verfahren gemäß Anspruch 1, weiterhin umfassend ein Ersetzen eines Originalbildes für das Betriebssystem der Softwareanwendung durch das einzelne ganze aktualisierte Bild (355) in einem Dauerspeicher (350).

## Revendications

1. Procédé mis en oeuvre par ordinateur permettant de maintenir des applications logicielles dans un environnement de système informatique, une application logicielle comprenant une seule image qui est pré-configurée pour exécuter une seule ou un ensemble d'applications connexes et adapté pour héberger sur un matériel physique ou en tant que machines virtuelles sur un hôte de virtualisation, ledit procédé comprenant :
le partitionnement d'une application logicielle (210) en pluralités de fichiers (200) au cours de la création, un noyau (1) étant un des fichiers ;
l'amorçage séparé (220, 410) du noyau (1) de l'application logicielle (210) sur un processeur d'un dispositif informatique (320) ;
l'envoi (420) d'un identificateur de l'application logicielle à un autre dispositif informatique (300) ;
la réception (450) d'une seule image entière mise à jour (3) pour le système d'exploitation de l'application logicielle sur la base de l'identificateur envoyé (2) ; et
l'instanciation (460) de pluralités d'applications logicielles mises à jour (360) à partir de la seule image entière mise à jour reçue en recouvrant (230, 440) des fichiers spécifiques à une application (375) sur la seule image entière mise à jour.

2. Procédé selon la revendication 1, incluant en outre le recouvrement (230, 440) des fichiers spécifiques à une application après l'amorçage du noyau.

3. Procédé selon la revendication 1, incluant en outre la détermination (430) au niveau dudit un autre dispositif informatique de si la seule image entière mise à jour est différente d'une image originale au niveau du dispositif informatique.

4. Procédé selon la revendication 1, incluant en outre l'utilisation de l'identificateur envoyé (2) pour établir une liste de rpm utilisée pour configurer l'application logicielle au cours de la création de l'appareil.

5. Procédé selon la revendication 1, dans lequel l'instanciation (460) de pluralités d'applications logicielles à partir de la seule image entière mise à jour reçue inclut en outre l'instanciation des pluralités d'applications logicielles sur encore d'autres dispositifs informatiques lors d'un réamorçage subséquent desdits encore d'autres dispositifs informatiques.

6. Procédé selon la revendication 1, incluant en outre l'arrêt de l'application logicielle, incluant la prise d'instantanés de fichiers spécifiques à une application et d'autres fichiers système que l'application logicielle peut avoir modifiés pendant l'exécution.

7. Procédé selon la revendication 7, lors d'un amorçage subséquent du noyau, l'instanciation des instantanés pris sur le dispositif informatique.

8. Procédé selon la revendication 1, incluant en outre le remplacement dans un stockage persistant (350) d'une image originale pour le système d'exploitation de l'application logicielle par la seule image entière mise à jour (355).
